# EUROPEAN PATENT SPECIFICATION

(11) **EP 3 828 009 B1**
(45) Date of publication and mention of the grant of the patent: **18.09.2024**
(21) Application number: 20204845.0
(22) Date of filing: 30.10.2020
(51) Int. Cl.: B60C 9/22, B60C 9/18

(54) **TIRE COMPRISING FABRIC STRIPS**
REIFEN MIT GEWEBESTREIFEN
PNEU COMPORTANT DES BANDELETTES DE TISSU

(30) Priority: 29.11.2019 KR 20190156602
(43) Date of publication of application: 02.06.2021
(73) Proprietor: HANKOOK TIRE & TECHNOLOGY CO., LTD, Gangnam-gu Seoul 06133 (KR)
(72) Inventor: Ko, Kil Ju, 34094 Daejeon (KR); Lee, Mi Jung, 34111 Daejeon (KR); Cho, Hyun Ran, 34111 Daejeon (KR); Chung, Hae Kwang, 35351 Daejeon (KR)
(74) Representative: Zimmermann, Tankred Klaus

(56) References cited:
- WO-A1-2015/016791
- WO-A1-2015/171093
- WO-A1-2018/203852
- DE-A1- 4 424 279
- US-A- 5 365 988

## Description

### BACKGROUND OF THE INVENTION

### 1. Technical Field

The present invention relates to a tire, and more particularly, the invention relates to a radial tire for passenger cars, which includes a fabric strip, and for which the production process is simple, the production cost required during the production process is lowered, the weight of the tire is reduced, and the fuel efficiency is increased when a car that uses the tire of the present invention is driven, by reducing the resistance to rolling.

### 2. Description of related art

Relevant prior art is known from documents WO 2015/171093 A1, WO 2018/203852 A1, WO 2015/016791 A1, DE 44 24 279 A1 and US 5 365 988 A.

Generally, a radial tire used for passenger cars, sports utility vehicles (SUV), and minivans has a steel belt structure (two-layered or three-layered belt layer) and includes thereon a reinforced belt structure in the circumferential direction. The reinforced belt structure is formed of nylon (Nylon 66), polyester (PET), or aramid hybrid (aramid and nylon) and is heat-shrinkable.

In particular, regarding the fabric (textile) for the reinforced belt, nylon cords are mainly used, and specifically, the nylon cords are obtained by thermally spinning raw material chips using an extrusion facility, drawing filaments having a wire diameter, and then performing multistage drawing through cooling and heat treatment. Yarns thus obtained are subjected to twisting and subsequent weaving using a yarn twisting facility. Finally, nylon cords are processed by calendering and cutting together with rubber, and thus a reinforced belt structure is formed.

The above-described reinforced belt structure is arranged in parallel to the tire casing at an angle of 0° or at an angle of 5° or less in the circumferential direction, and the reinforced belt structure plays the role of resisting the elongation of the tire caused by centrifugal force at a high speed.

For the current radial tires, there is a demand for increasing the fuel efficiency and reducing the production cost by reducing the weight while maintaining the existing performances such as driving durability and steering stability.

However, reducing the tire weight by reducing the thickness of a rubber layer that is included in the reinforced belt structure of a tire is an old-fashioned method, and the effect of reducing the weight and reducing the production cost is not so significant.

### SUMMARY OF THE INVENTION

An object of the present invention is to provide a tire for which the production process is simple, the production cost required during the production process is lowered, the weight of the tire is reduced, and the fuel efficiency is increased when a car that uses the tire of the present invention is driven, by reducing the resistance to rolling.

According to an aspect of the present invention, there is provided a tire according to claim 1.

According to an embodiment of the invention, the fabric strip may not include topping rubber for topping the fabric strip.

According to the invention, the wefts of the fabric strip include nylon or polyethylene terephthalate (PET).

According to still another embodiment of the invention, the wefts of the fabric strip may have been treated by adding a tacky adhesive emulsion thereto or applying a low-melting point material thereto and then heat-treated.

According to still another embodiment of the invention, the fabric strip may have a thickness of 0.4 mm to 1.0 mm and a width of 5 mm to 200 mm, and the number of warps in a fabric strip may be 4 to 500.

According to the invention, the warps of the fabric strip have been treated by applying a resorcinol-formaldehyde latex (RFL) adhesive and a tacky adhesive emulsion thereto and then heat-treated.

The tire according to the embodiments of the present invention has effects in which the production process is simple, the production cost required during the production process is lowered, the weight of the tire is reduced, and the fuel efficiency is increased when a car using the tire of the present invention is driven, by reducing the resistance to rolling.

### BRIEF DESCRIPTION OF DRAWINGS

Fig. 1 is a half section view schematically illustrating a tire according to an embodiment of the present invention.
Fig. 2 is a diagram schematically illustrating a reinforced belt structure according to conventional technologies.
Fig. 3 is a photograph showing the reinforced belt structure according to conventional technologies.
Fig. 4 is a diagram schematically illustrating a fabric strip according to the present invention.
Fig. 5 is a photograph showing the fabric s trip according to the present invention.
Fig. 6 is a diagram illustrating the process of producing a tire using a fabric strip.
Fig. 7 is a photograph taken to observe whether air bubbles are generated after vulcanization in a Comparative Example, in which a conventional reinforced belt structure is applied.
Fig. 8 is a photograph taken to observe whether air bubbles are generated after vulcanization in an Example, in which the fabric strip according to the present invention are applied.

### DETAILED DESCRIPTION OF THE INVENTION

Hereinafter, the present invention will be described in more detail.

The tire according to embodiments of the present invention includes a fabric strip in a reinforced belt layer.

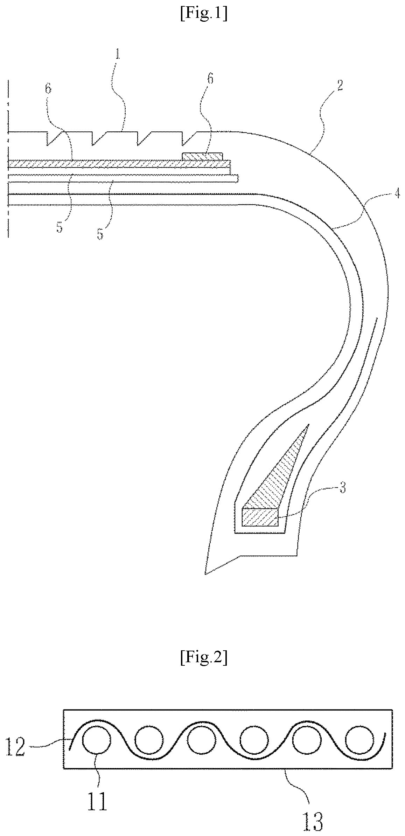

Fig. 1 is a half section view schematically illustrating the tire. In the following description, the tire will be explained with reference to Fig. 1.

The tire includes a tread part (1), sidewall parts (2), and bead parts (3). A carcass layer (4) is provided between a pair of bead parts (3) that are disposed on the left-hand side and the right-hand side, and the two edges in the tire width direction of the carcass layer (4) are respectively extended upward winding around the circumference of each of the bead parts (5) from the inner side to the outer side of the tire. On the outer side of the carcass layer (4), a steel belt layer (5) and a reinforced belt layer (6) are installed, and an inner liner (not shown in the diagram) is disposed on the inner side of the carcass layer (4).

According to the present invention, a fabric strip composed of textile cords having enhanced tacky adhesiveness and arrangement stability is applied in substitution for a conventional reinforced belt structure composed of textile cords and a rubber calendering product. Thereby, effects of simplifying the production process, lowering the production cost required during the production process, reducing the weight of the tire, and increasing the fuel efficiency when a car using the tire according to the embodiments of the present invention is driven, by reducing the resistance to rolling, while maintaining the performance of conventional radial tires for passenger cars, can be obtained.

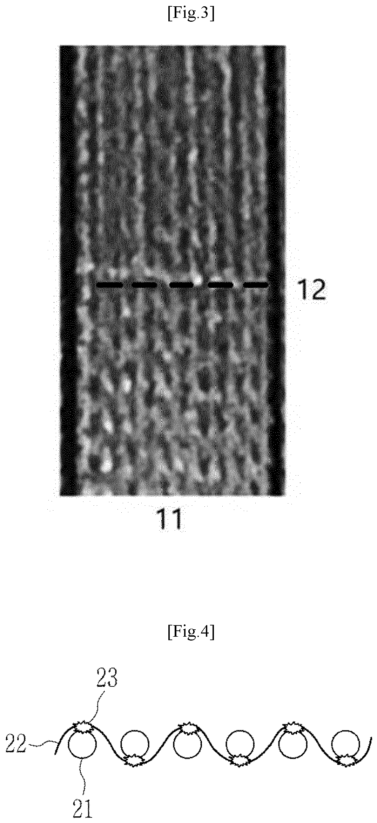

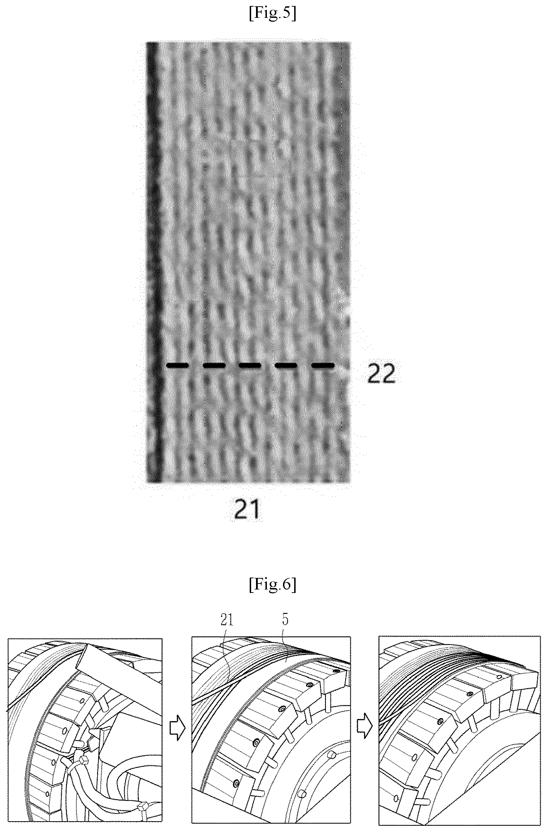

Specifically, Fig. 2 is a diagram schematically illustrating a reinforced belt structure according to conventional technologies, and Fig. 3 is a photograph of the reinforced belt according to conventional technologies, showing the textile cords in the reinforced belt. Fig. 4 is a diagram schematically illustrating the fabric strip according to the present invention, and Fig. 5 is a photograph of the fabric strip according to the present invention, showing the textile cords in the fabric strip.

As can be seen in Fig. 2, the textile cords for a conventional reinforced belt must be produced from a fabric so as to be calendered with rubber, and at this time, wefts (12) are used so that warps (11), which are the textile cords, maintain the arrangement in parallel as shown in Fig. 3. The wefts (12) have a smaller diameter than the warps (11) that serve as the textile cords for a reinforced belt, have a high elongation percentage, and are positioned in a zigzag manner in a direction of 90° with respect to the wefts (11). More specifically, it is preferable that the diameter of the wefts (12) is as small as 1/50 to 1/2 of the diameter of the warps (11). In a case in which the diameter of the wefts (12) is as small as 1/50 to 1/2 of the diameter of the warps (11) as described above, the vacant space between a warp and another warp produced in the tire production process is very narrow so that air inadequacy, by which air bubbles are generated in the vacant space, does not occur, and there is an effect of obtaining excellent durability of the tire.

The wefts (12) do not stick to the warps (11) due to the lack of tacky adhesive force and have flexibility. However, the textile cords for conventional reinforced belts include topping rubber (13) on one surface or both surfaces of the textile cords as a result of calendaring with rubber.

On the other hand, as can be seen in Fig. 4 and Fig. 5, the fabric strip that is applied to the reinforced belt layer according to the present invention includes a plurality of warps (21) arranged in parallel to one another, and wefts (22) arranged to weave the warps (21). In this case, the wefts (22) are adhered to the warps (21).

That is, in the fabric strip, since the wefts (22) are adhered to the warps (21) and thus tacky adhesiveness and arrangement stability are enhanced, the fabric strip is directly disposed between a steel belt layer (5) and a tread part (1) without being treated in a calendaring process with rubber. Thereby, the topping rubber (13) of the reinforced belt layer (6) is eliminated, and thus, the tire weight can be significantly reduced. Accordingly, the fabric strip may not include topping rubber (13) for topping the fabric strip.

Since the warps (21) of the fabric strip should be capable of heat-shrinking in view of the characteristics of the reinforced belt layer (6), the warps (21) include a polyamide or a polyester. Examples of the polyamide include nylon 6 and nylon 66, and examples of the polyester include polyethylene terephthalate (PET), polyethylene naphthalate (PEN), and polybutylene naphthalate (PBN)> Furthermore, a hybrid of aramid and nylon, a hybrid of aramid and polyester, and the like are also capable of heat-shrinking and can therefore be used.

Furthermore, the thermal shrinkage of the warps (21) of the fabric strip may be 0.55 to 10%, and the thermal shrinkage can be measured according a standard testing method using a Testrite apparatus (manufactured by Testrite, Ltd.). In a case in which the thermal shrinkage of the warps (21) is less than 0.5%, the fabric strip may not be able to achieve satisfactory compression-bonding of the belt, the carcass, and the like by heat-shrinking at the time of vulcanization.

The wefts (22) are used in order to maintain the arrangement of the fabric strip, and the material of the wefts (22) is nylon or polyethylene terephthalate (PET).

However, unlike the existing wefts (12), the wefts (22) are not associated with topping rubber (13), and the arrangement of the warps (21) may be relatively disrupted. Therefore, in order to prevent this, a tacky adhesive (23) for bonding the contact sites of the wefts (22) and the warps (21) and immobilizing the warps and the wefts to eliminate flexibility, is incorporated. The wefts are adhered to the warps (21) by means of the tacky adhesive (23).

The tacky adhesive (23) is a tacky adhesive obtained by adding a tacky adhesive emulsion of an epoxy resin, an acrylic resin or terpene-based resin and heat-treating the resultant.

The thickness of the fabric strip is 0.4 mm to 1.0 mm and is the same as the diameter of the warps (21). The width of the fabric strip can be freely adjusted to the level of 5 mm to 200 mm, and the number of warps (21) in the fabric strip can be adjusted to 4 to 500. The length of a conventional reinforced belt structure should be at least 300 m or more, and preferably 600 m or more, in order to secure stable calendering processability; however, the fabric strip is not limited in terms of the minimum length for securing processability because the fabric strip can be directly applied to a tire molding process without a calendering process.

Fig. 6 is a diagram illustrating the process of producing a tire using a fabric strip, and according to Fig. 6, since the fabric strip is directly applied to a tire molding process without a topping rubber calendering process, the fabric strip is brought into direct contact with a rubber layer of the steel belt layer (5) during molding. Therefore, since the warps (21) of the fabric strip should have sufficient tacky adhesiveness in order to successfully achieve a molding operation, the warps (21) of the fabric strip can acquire sufficient tacky adhesiveness by, applying an RFL (resorcinol-formaldehyde latex) adhesive and a tacky adhesive emulsion of an epoxy resin, an acrylic resin of a terpene-based resin to the warps and heat-treating the warps. Furthermore, it is also possible to add various tacky adhesives to the RFL adhesive for this purpose.

Accordingly, the fabric strip has tacky adhesiveness and thus can be directly applied in the tire molding process without a calendering process and a cutting process.

### Examples

Hereinafter, embodiments of the present invention will be described in detail so that those having ordinary skill in the art to which the present invention is pertained can easily carry out the invention. However, the present invention can be embodied in a variety of different forms and are not intended to be limited to the embodiments described herein.

### [Production Example: Production of fabric strip]

A test for comparing a conventional reinforced belt structure and the fabric strip of the present invention was carried out using 205/55R16-size tires for passenger cars. The reinforced belt structure was produced through the processes of tire calendering, cutting, molding, and vulcanization. The fabric strip was produced through the processes of tire molding (see Fig. 4) and vulcanization and was produced by a conventional method, except that the calendering and cutting processes were not included.

### [Experimental Example: Test results for tire with fabric strip]

With tires to which the fabric strip was applied, the weight of the reinforced belt was reduced by about 50%, and an effect of reducing the weight of the tire by about 2% was obtained. The resistance to rolling was increased by about 1%. Thus, it is considered that the fabric strip is advantageous for improving the fuel efficiency.

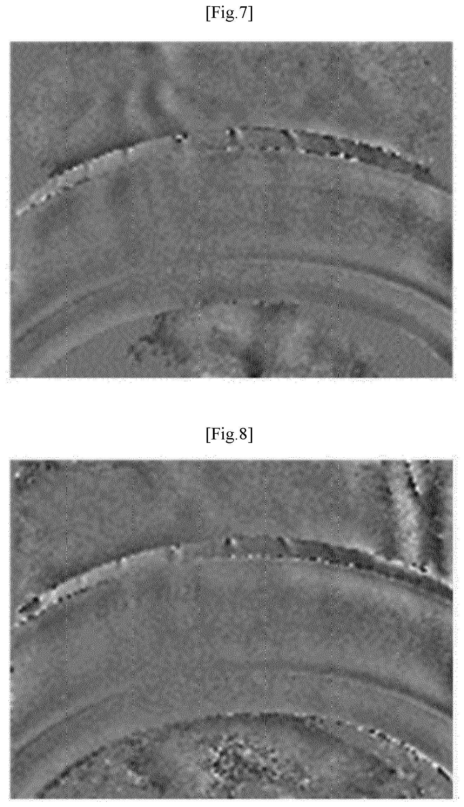

Fig. 7 and Fig. 8 are photographs taken to observe whether air entrapment occurred after vulcanization in a Comparative Example to which the conventional reinforced belt structure was applied, and in an Example to which the fabric strip was applied. As can be seen from Fig. 7 and Fig. 8, the reinforced belt structure produced by a conventional uncalendered film method had a problem that as shown in Fig. 7, there were no passages through which air could escape from the tire, and therefore, air was entrapped after vulcanization. On the other hand, since the fabric strip was not produced by a film method, a problem with air entrapment was not found as shown in Fig. 8.

Preferred embodiments of the present invention have been described in detail above; however, the scope of rights of the present invention is not intended to be limited thereby but only by the appended claims.

### EXPLANATIONS OF LETTERS OR NUMERALS

- 1:: Tread part
- 2:: Sidewall part
- 3:: Bead part
- 4:: Carcass layer
- 5:: Steel belt layer
- 6:: Reinforced belt layer
- 11, 21:: Warp
- 12, 22:: Weft
- 13:: Topping rubber
- 23:: Tacky adhesive

## Claims

1. A tire comprising a fabric strip in a reinforced belt layer (6), the fabric strip including:
a plurality of warps (21) arranged in parallel to one another, and wefts (22) arranged to weave the warps (21),
wherein the warps (21) include a polyamide or a polyester, and wherein the wefts (22) include nylon or polyethylene terephthalate (PET),
wherein the warps (21) have been treated by applying a resorcinol-formaldehyde latex (RFL) adhesive and a tacky adhesive emulsion of at least one of an acrylic resin, an epoxy resin and a terpene-based resin and then heat treated, wherein the wefts (22) are adhered to the warps (21).

2. The tire according to claim 1, wherein the fabric strip does not include topper rubber (13) for topping the fabric strip.

3. The tire according to claim 1, wherein the fabric strip has a thickness of 0.4 mm to 1.0 mm and a width of 5 mm to 200 mm, and the number of warps (21) in the fabric strip is 4 to 500.

4. The tire according to one of the preceding claims, wherein the thickness of the fabric strip is the same as the diameter of the warps (21).

## Patentansprüche

1. Ein Reifen, der in einer verstärkten Gürtelschicht (6) einen Gewebestreifen aufweist, wobei der Gewebestreifen Folgendes umfasst:
eine Mehrzahl von Kettfäden (21), die parallel zueinander angeordnet sind, und Schussfäden (22), die angeordnet sind, um die Kettfäden (21) zu weben,
wobei die Kettfäden (21) ein Polyamid oder einen Polyester umfassen, und wobei die Schussfäden (22) Nylon oder Polyethylenterephthalat (PET) umfassen,
wobei die Kettfäden (21) behandelt worden sind durch Aufbringen eines Resorcin-Formaldehyd-Latex (RFL)-Hartmittels und einer klebrigen Haftmittelemulsion von zumindest einem von einem Acrylharz, einem Epoxidharz und einem Harz auf Terpenbasis, und dann wärmebehandelt worden sind, wobei die Schussfäden (22) an den Kettfäden (21) haften.

2. Der Reifen gemäß Anspruch 1, bei dem der Gewebestreifen kein Abdeckgummi (13) zum Abdecken des Gewebestreifens umfasst.

3. Der Reifen gemäß Anspruch 1, bei dem der Gewebestreifen eine Dicke von 0,4 mm bis 1,0 mm und eine Breite von 5 mm bis 200 mm aufweist, und die Anzahl der Kettfäden (21) in dem Gewebestreifen 4 bis 500 beträgt.

4. Der Reifen gemäß einem der vorhergehenden Ansprüche, bei dem die Dicke des Gewebestreifens gleich dem Durchmesser der Kettfäden (21) ist.

## Revendications

1. Pneu comprenant une bandelette de tissu dans une couche de ceinture renforcée (6), la bandelette de tissu comportant:
une pluralité de chaînes (21) disposées en parallèle l'une par rapport à l'autre, et des trames (22) disposées de manière à tisser les chaînes (21),
dans lequel les chaînes (21) comportent un polyamide ou un polyester, et dans lequel les trames (22) comportent du nylon ou du polyéthylène téréphtalate (PET),
dans lequel les chaînes (21) ont été traitées en appliquant un adhésif au latex de résorcinol-formaldéhyde (RFL) et une émulsion adhésive collante d'au moins l'une parmi une résine acrylique, une résine époxy et une résine à base de terpène et ont ensuite été traitées thermiquement, dans lequel les trames (22) sont adhérées aux chaînes (21).

2. Pneu selon la revendication 1, dans lequel la bandelette de tissu ne comporte pas de caoutchouc de couverture (13) destiné à recouvrir la bandelette de tissu.

3. Pneu selon la revendication 1, dans lequel la bandelette de tissu présente une épaisseur de 0,4 mm à 1,0 mm et une largeur de 5 mm à 200 mm, et le nombre de chaînes (21) dans la bandelette de tissu est de 4 à 500.

4. Pneu selon l'une des revendications précédentes, dans lequel l'épaisseur de la bandelette de tissu est la même que le diamètre des chaînes (21).
